# EUROPEAN PATENT SPECIFICATION

(11) **EP 0 662 364 B1**
(45) Date of publication and mention of the grant of the patent: **27.08.1997**
(21) Application number: 95300124.5
(22) Date of filing: 10.01.1995
(51) Int. Cl.: B23H 7/10

(54) **Wire cut electric discharge machine**
Funkerosionsdrahtschneidemaschine
Machine d'usinage par décharge électrique à découpage par fil

(30) Priority: 10.01.1994 JP 12061/94
(43) Date of publication of application: 12.07.1995
(73) Proprietor: FANUC LTD., Minamitsuru-gun, Yamanashi 401-05 (JP)
(72) Inventor: Kita, Yuki, Room 10-203, FANUC Manshonharimomi, Yamanashi, 401-05 (JP); Takayama, Yushi, FANUC Dai 3 virakaramatsu, Yamanashi, 401-05 (JP)
(74) Representative: Billington, Lawrence Emlyn

(56) References cited:
- PATENT ABSTRACTS OF JAPAN vol. 011 no. 006 (M-551) ,8 January 1987 & JP-A-61 182731 (INOUE JAPAX RES INC) 15 August 1986,
- PATENT ABSTRACTS OF JAPAN vol. 014 no. 499 (M-1042) ,31 October 1990 & JP-A-02 205415 (FANUC LTD) 15 August 1990,

## Description

This invention relates to a wire cut electric discharge machine which machines a work piece into a predetermined shape by the energy of an arc discharge which preferably, but not essentially, generates continuously an intermittent discharge phenomenon between two electrodes, making a wire one electrode and a work piece the other electrode.

A wire cut electric discharge machine is already well known. In a wire cut electric discharge machine, since a wire which is one electrode is worn away at the time of discharge, a wire running system is provided for supplying a wire continuously.

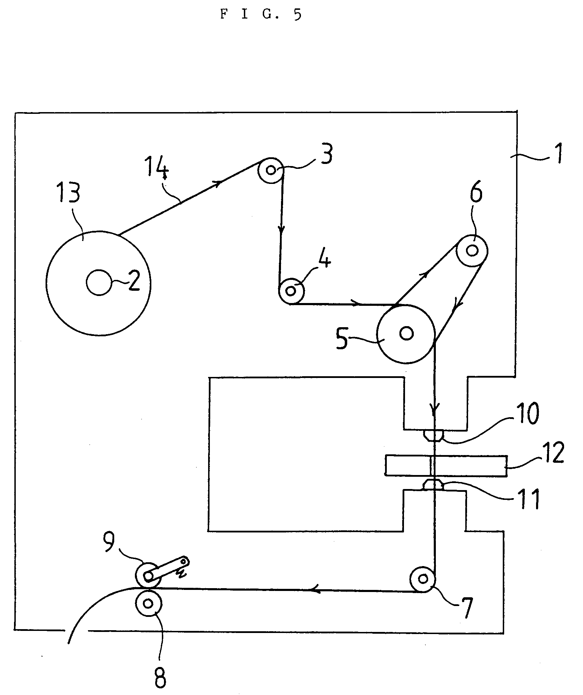

Fig. 5 shows a general wire running system in a wire cut electric discharge machine, comprising a feed axle 2 rotatably supported on a machine body wall 1 of a wire cut electric discharge machine, guide rollers 3 and 4, a brake roller 5, a control roller 6, a guide roller 7 and a feed roller 8 and a pinch roller 9. Reference numeral 10 represents an upper nozzle, 11 represents a lower nozzle and 12 represents a workpiece.

The wire 14 drawn out from a feed reel 13 mounted on the feed axle 2 passes through guide rollers 3 and 4, is wound on the brake roller 5 and the control roller 6, making a round of the brake roller 5, and is fed to the upper nozzle 10. The brake roller 5 has a resistance to its rotation. Then, the wire 14 reaches the workpiece 12 through the upper nozzle 10, and after conducting an electric discharge machining of the workpiece 12, is guided to the lower nozzle 11, and reaches the feed roller 8 via a guide roller 7. The feed roller 8 is driven and rotated in a direction of feeding out the wire, and the wire 14 is fed out by being pushed toward the feed roller 8 by a pinch roller 9.

In the wire route, the wire 14 runs on the route by being drawn, from the feed reel 13, by the feed roller 8. Therefore, the wire 14 in the downstream side from the brake roller 5 experiences a running resistance applied by the brake roller 5. Thereby, at the position of workpiece 12, there is no slackness caused in the wire 14, and normal machining can be done to the workpiece 12.

On the other hand, since the wire 14 is designed to run abutting against the peripheral face of each roller (guide rollers 3, 4 and 7, brake roller 5 and control roller 6) at a specific position, and tension is applied to the wire 14, the wire 14 is always pushed against the peripheral face of each roller at the fixed position. Consequently, when being used for a long period of time, a wire groove comes to be formed at the position on the peripheral face of each roller where the wire 14 abuts. When the wire groove is formed, the circularity of each roller deviates to make the tension of the wire 14 pulsate, and sometimes the wire 14 may go in and out of the wire groove to cause vibrations in the wire 14. As a result, there may be caused a minute error in the shape of the machined product, or a stria may appear on the cut face. This is likely to be caused particularly in the brake roller 5.

There are known in the prior art measures for avoiding such problems, by providing relative reciprocal movement between the direction of the wire and the brake roller, in the axial direction of the brake roller.

For example, JP-A-2-205415 discloses a wire electric discharge machine wherein a shift roller having a wire engaging groove is reciprocated backwards and forwards, to cause the wire to move backwards and forwards along the circumference of an axially fixed brake roller.

Further, JP-A-61-182731 discloses an arrangement wherein the direction of the wire is kept stationary, whereas the roller is reciprocated axially by means of an arrangement of a rotary disc and an eccentric rod coupled to the shaft of the roller.

The object of the present invention is to provide a wire cut electric discharge machine having a wire running system in which flaws such as a wire groove are prevented or reduced on the peripheral face of at least one roller, this object being achieved in a simple and uncomplicated manner.

Accordingly, according to the present invention there is provided a wire cut electric discharge machine in which, in a wire running system, the position of a roller abutting against a wire can be varied in the direction of the rotational axis of the roller with respect to the wire which has a fixed running position, characterised in that the position of the roller can be adjusted manually to different fixed axial positions in the direction of its rotational axis.

As a result, an embodiment of wire cut electric discharge machine according to the present invention may have the following effects:

In the wire running system of the wire cut electric discharge machine, the wear of a roller used abutting against the wire can be suppressed, and the life time of this roller can be prolonged.

There may be no, or reduced, vibration of the wire and changes of the wire tension caused by the wire groove and the like on the peripheral face of a roller, whereby more accurate wire cut electric discharge machining can be performed.

To provide a better demonstration of the characteristics, hereafter, as examples without any restrictive character, some embodiments are described referring to accompanying drawings, wherein
figure 1 is a side view partially in section according to an embodiment not in accordance with the present invention, but shown for explanation only;
figure 2 is a side view partially in section according to another embodiment not in accordance with the present invention, but shown for explanation only;
figure 3 is a side view partially in section according to a first embodiment of the present invention,
figure 4 is a side view partially in section according to a second embodiment of the present invention, and
figure 5 is a schematic view showing the wire running system in the wire cut electric discharge machine.

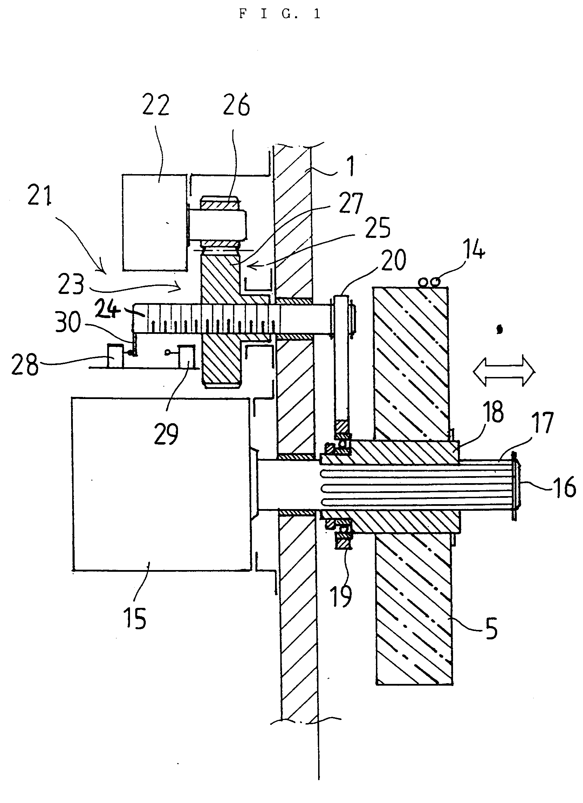

Fig. 1 shows a part of the brake roller 5 in the wire running system of the wire cut electric discharge machine. The overall structure of the the wire cut electric discharge machine is well known, and the wire running system does not particularly differ from the aforementioned conventional embodiment. Therefore, these detailed descriptions are omitted.

The brake roller 5 is a roller made of a synthetic resin, and mounted so that it may rotate integrally with a brake axle 16 of a brake device 15 mounted on the inner side of the machine body wall 1. In this embodiment, adopted in the brake device 15 is an electromagnetic powder brake which can adjust the control force by operating electromagnetically.

In a part of the brake axle 16, projecting from the machine body wall 1, male splines 17 are provided, to which a female splined boss 18 of the brake roller 5 is fitted. Therefore, the brake roller 5 is restricted in the rotational direction of the brake axle 16, and is movable in the axial direction.

To said boss 18, a base portion of a fork 20 for shifting is attached via a radial bearing 19, and to the tip of the fork 20 is coupled a shift device 21 attached to the machine body wall 1.

The shift device 21 has a screw-feeding mechanism 23 driven by a motor 22. The screw-feeding mechanism 23 has a screw rod 24 and a feed nut 25. The screw rod 24 pierces through the machine body wall 1 and is rotatably supported, slidable in the axial direction. The feed nut 25 has an integral follower gear 27 meshed with a drive gear 26 of the motor 22, and is in screw-threaded engagement with screw rod 24, while being supported rotatably to the inside of the machine body wall 1. The projecting end of the screw rod 24 is coupled rotatably, but unmovably in the axial direction, to the tip portion of said fork 20.

At the inner end of the screw rod 24, a dog 30 is fixed for operating microswitches 28 and 29. The microswitch 28 is to detect the moving limit in the inside direction (in the left direction in Fig. 1) of the screw rod 24, and the microswitch 29 is to detect the moving limit in the outside direction (in the right direction in Fig. 1) of the screw rod 24. The detection signal of these switches is transferred to the brake device provided in the wire cut electric discharge machine.

With the aforementioned structure, the brake roller 5 can impart tension to the wire 14 integrally in its rotational direction with respect to the brake axle 16, while it can be moved and positioned in the axial direction. Namely, when the motor 22 of the shift device 21 is driven, the screw-feeding mechanism 23 is driven, and the brake roller 5 is moved on the brake axle 16 via the fork 20 to be positioned at an optional place.

The driving of the motor 22 is under the control of the brake device (not shown), and is rotated by a set-up quantity at each predetermined time, or every time the power supply of the brake device is turned on. The rotation direction depends on the on/off signal of the microswitches 28 and 29, and the rotation direction is reversed at positions of the inner moving limit and the outer moving limit of the screw rod 24. Thereby, the screw rod 24 is automatically reciprocated by cooperation of the outer screw thread on the screw rod 24, with the inner screw thread on the feed nut 25.

As a result, the position of the wire 14 located at a fixed running position in Fig. 1 is changed relatively with respect to the peripheral face of the brake roller 5, whereby a wire groove is not formed on the peripheral face of the brake roller 5.

The above embodiment is related to the brake roller which controls the tension of the wire, but the present invention can also, or alternatively, be applied to a wire guide roller which converts the running direction of the wire.

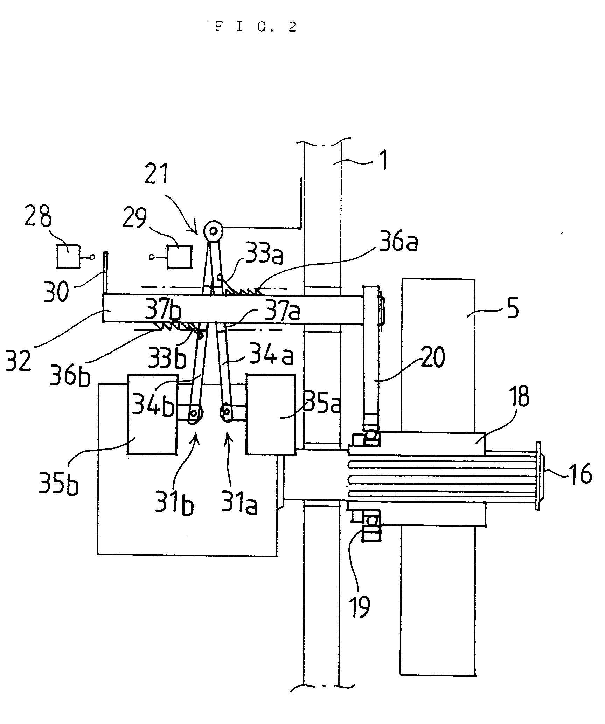

Fig. 2 shows another embodiment also related to the brake roller 5. It differs in the structure of the shift device 21 from the embodiment of Fig. 1.

In this embodiment, the shift device 21 has two pairs of one-direction latch mechanisms 31a and 31b for feeding outwardly and feeding inwardly, respectively. One-directional latch mechanisms 31a and 31b are disposed in a direction crossing a feed rod 32 which is disposed movably in inner and outer directions piercing through the machine body wall 1, and comprise oscillatory levers 34a and 34b having one direction-meshing pawls 33a and 33b, and solenoids 35a and 35b for driving the oscillatory levers 34a, 34b.

Projections 36a for feeding outwardly and projections 36b for feeding inwardly are formed in two lines at a predetermined pitch in a form of sawtooth on the feed rod 32. Upper end portions of the oscillatory levers 34a and 34b are pivotally supported on the machine body wall 1, and the feed rod 32 pierces through slack holes formed in the intermediate portions thereof. The one-direction feedpawls 33a and 33b are pivotally attached in the vicinity of the slack holes 37a and 37b, and the tip portions thereof are meshed respectively with the projections 36a for feeding outwardly, and the projections 36b for feeding inwardly. Solenoids 35a and 35b are fixed to the machine body wall 1.

Reference numerals 28 and 29 represent microswitches, and 30 represents a dog. The dog 30 is attached to the inner end of the feed rod 32 to operate the microswitches 28 and 29. The microswitch 28 is to detect the inner moving limit of the feed rod 32, and the microswitch 29 is to detect the outer moving limit of the feed rod 32.

A tip portion of the fork 20 for shifting is attached to the tip portion of the feed rod 32. The base portion of the fork 20 is attached to the boss 18 of the brake roller 5 via a radial bearing 19.

Therefore, whenever the solenoid 35a is driven, the feed rod 32 is extended in the outward direction pitch by pitch of the projections 36a for feeding, and the brake roller 5 is driven outwards in the axial direction of the brake axle 16 via the fork 20. When the solenoid 35b is driven, the feed rod 32 is shifted in the inward direction, and the brake roller 5 is shifted inward in the axial direction of the brake axle 16. Thus, the peripheral face of the brake roller 5 is moved with respect to the wire 14 in a fixed running position, whereby a wire groove and the like are not formed on the peripheral face of the brake roller 5.

Driving of the solenoids 35a and 35b is under the control of the brake device, and the solenoids are driven by a predetermined number of times every time the power supply of the brake device is turned on. Feeding inwardly and feeding outwardly is switched by the on/off signal of the microswitches 28 and 29, and the screw rod 32 is automatically reciprocated. Furthermore, when the oscillatory lever 34a for feeding outwardly is driven, the oscillatory lever 34b for feeding inwardly is moved to the outermost position to release the engagement of the projection 36b for feeding, with the meshing pawl 33b. On the other hand, when the oscillatory lever 34b for feeding inwardly is driven, the oscillatory lever 34a for feeding outwardly is moved to the innermost position to release the engagement of the projection 36a for feeding, with the meshing pawl 33a.

In the case of this embodiment, the feed ratio of the brake roller 5 is determined on the basis of the pitch size of the projections for feeding 36a and 36b, and there is an advantage in making the structure simple, though there is small degree of freedom in setting up the feed ratio.

This structure can also, or alternatively, be applied to guide rollers 3, 4 and 7, and the control roller 6. However, the brake device 15 is not required in these cases.

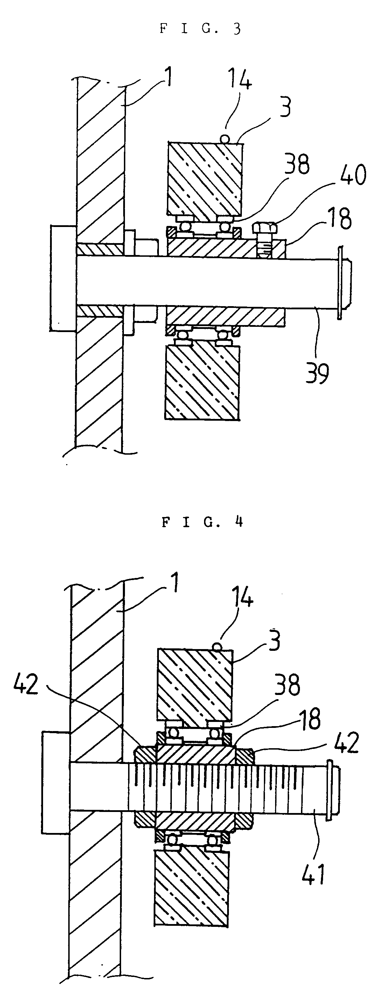

Fig. 3 is the first inventive embodiment and is shown applied to the guide roller 3. The guide roller 3 is attached rotatably to the boss 18 via a radial bearing 38, and is supported through the boss by a support shaft 39 projecting from and fixed to the machine body wall 1.

The support shaft 39 is formed to be longer than the length of the boss 18 by a length close to the width of the peripheral face of the guide roller 3, and the boss 18 can slide on this support shaft 39. Reference numeral 40 represents a setscrew screwed into the boss 18, whose tip abuts against the surface of the support shaft 39 to fix the boss 18 at an optional position on the support shaft 39.

According to this structure, the position of the guide roller 3 can be optionally adjusted by a manual operation with respect to the wire 14 located in the fixed running position. Since it is operated manually it is not fit for frequent adjustment of the movement, but for rollers such as guide rollers 3 and 4, of which the number of adjustments may be few, it is suitable because the structure is simple and inexpensive. This embodiment may be applied to other rollers. When applied to the brake roller 5, the radial bearing 38 is not required, and a brake axle 16 having a brake device 15 is substituted for the support shaft 39.

Fig. 4 is the second embodiment of the invention, and is also applied to the guide roller 3. The guide roller 3 is attached rotatably to the boss 18 via a radial bearing 38, and is supported through the boss 18 by a screw axle 41 projecting from and fixed to the machine body wall 1.

The screw axle 41 is formed to be longer than the length of the boss 18 by a length close to the width of the peripheral face of the guide roller 3, and is externally threaded. The boss 18 has a cylindrical shape, and is fitted to the screw axle 41 so as to move on the screw axle 41 in inwards and outwards directions. Reference numerals 42 represent locknuts, and are screwed onto the screw axle 41 at both ends of the boss 18 to fix the position of the the boss 18 on the screw axle 41, that is, the position of the guide roller 3.

According to this structure, the position of the guide roller 3 can be also optionally adjusted by a manual operation with respect to the wire 14 located in the fixed running position. Since it is operated manually it is not fit for frequent adjustment of the movement, but for rollers such as guide rollers 3 and 4 of which the number of adjustments may be few, it is suitable because the structure is simple and inexpensive. This embodiment may be applied to other rollers. When applied to the brake roller 5, the radial bearing 38 is not required, and a brake axle 16 having a brake device 15 is substituted for the screw axle 41.

The present invention is not limited to the above illustrated embodiments. It is however preferable that the position of rollers 3, 4, 6 and 5 abutting against the wire 14 can be adjusted in the direction of the rotation axis thereof (the axes of brake axle 16, support shaft 39, and screw axle 41) with respect to the wire 14 in the fixed position. Alternatively, merely one or some of the rollers 3, 4, 6 and 5 may be so adjustable.

## Claims

1. A wire cut electric discharge machine in which, in a wire running system, the position of a roller (3) abutting against a wire (14) can be varied in the direction of the rotational axis of the roller (3) with respect to the wire (14) which has a fixed running position, characterised in that means (18, 39 - 42) are provided for manually adjusting the position of the roller (3) to different fixed axial positions in the direction of its rotational axis.

2. A wire cut electric discharge machine according to claim 1, comprising:
a support axle (39) fixed to a machine body (1),
a boss (18) fitted slidably to said support axle (39),
a fixing mechanism (40) for fixing said boss (18) to said support axle (39), and
said roller (3) being mounted on said boss (18).

3. A wire cut electric discharge machine according to claim 2, wherein said fixing mechanism comprises a screw hole directed in the radial direction in the boss (18), and a setscrew (40) screwed in said screw hole.

4. A wire cut electric discharge machine according to claim 1, which comprises:
a screw axle (41) fixed to a machine body (1) and threaded on the outer peripheral face thereof,
a boss (18) screwed to said screw axle (41),
said roller (3) being mounted on said boss (18), and
a pair of locknuts (42, 42) which are screwed to said screw axle (41) and which contact both ends of the boss (18) screwed to said screw axle (41), to prohibit said boss (18) from moving in the axial direction with respect to said screw axle (41).

5. A wire cut electric discharge machine according to any one of the preceding claims, wherein the roller is a brake roller.

6. A wire cut electric discharge machine according to claim 2, 3 or 4, wherein said roller is a wire guide roller (3) mounted on said boss (18) via a bearing (38).

7. A wire cut electric discharge machine according to any preceding claim, wherein said adjustable roller is one of a plurality of rollers which are adjustable in the directions of the rotational axes thereof with respect to a fixed wire running position.

## Patentansprüche

1. Elektrische Entladungsdrahtschneidemaschine, in der in einem Drahtlaufsystem die Position einer Rolle (3), welche sich gegen einen Draht (14) legt, in der Richtung der Drehachse der Rolle (3) in bezug auf den Draht (14), der eine feste Laufposition hat, verändert werden kann,
dadurch **gekennzeichnet,** daß Mittel (18, 39 - 42) zum manuellen Einstellen der Position der Rolle (3) in verschiedene feste axiale Positionen in der Richtung ihrer Drehachse vorgesehen sind.

2. Elektrische Entladungsdrahtschneidemaschine nach Anspruch 1, die umfaßt:
eine Tragachse (39), die an einem Maschinenkörper (1) befestigt ist,
ein Nabenstück (18), das verschiebbar auf die Tragachse (39) gesetzt ist,
einen Befestigungsmechanismus (40) zum Befestigen des Nabenstücks (18) an der Tragachse (39),
wobei die Rolle (3) auf dem Nabenstück (18) montiert ist.

3. Elektrische Entladungsdrahtschneidemaschine nach Anspruch 2, bei welcher der Befestigungsmechanismus ein Schraubenloch, das in der radialen Richtung in dem Nabenstück (18) ausgerichtet ist, und eine Einstellschraube (40), die in das Schraubenloch eingeschraubt ist, umfaßt.

4. Elektrische Entladungsdrahtschneidemaschine nach Anspruch 1, die umfaßt:
eine Schraubenachse (41), die an einem Maschinenkörper (1) befestigt ist und in die äußere Umfangsseite desselben eingeschraubt ist,
ein Nabenstück (18), das auf die Schraubenachse (41) geschraubt ist,
wobei die Rolle (3) auf dem Nabenstück (18) montiert ist, und
ein Paar von Gegenmuttern (42, 42), die auf die Schraubenachse (41) geschraubt sind und beide Enden des Nabenstücks (18), das auf die Schraubenachse (41) geschraubt ist, berühren, um zu verhindern, daß sich das Nabenstück (18) in der axialen Richtung in bezug auf die Schraubenachse (41) bewegt.

5. Elektrische Entladungsdrahtschneidemaschine nach einem der vorhergehenden Ansprüche, bei der die Rolle eine Bremsrolle ist.

6. Elektrische Entladungsdrahtschneidemaschine nach Anspruch 2, 3 oder 4, bei der die Rolle eine Drahtführungs-Rolle (3) ist, die über ein Lager (38) auf dem Nabenstück (18) montiert ist.

7. Elektrische Entladungsdrahtschneidemaschine nach einem der vorhergehenden Ansprüche, bei der die einstellbare Rolle eine aus einer Vielzahl von Rollen ist, die in den Richtungen der Drehachsen derselben in bezug auf eine feste Drahtlaufposition einstellbar sind.

## Revendications

1. Machine d'étincelage à découpe par fil dans laquelle, dans un système de défilement du fil, on peut faire varier la position d'un rouleau (3) venant buter contre un fil (14) dans la direction de l'axe de rotation du rouleau (3) par rapport au fil (14) dont la position de défilement est fixe, caractérisée en ce que des moyens (18, 39-42) sont prévus pour le réglage manuel de la position du rouleau (3) à différentes positions axiales fixes dans la direction de son axe de rotation.

2. Machine d'étincelage à découpe par fil selon la revendication 1, comprenant:
un axe de support (39) fixé à un corps de machine (1),
une protubérance (18) disposée en coulissement par rapport audit axe de support (39),
un mécanisme de fixation (40) pour fixer ladite protubérance (18) audit axe de support (39), et
ledit rouleau (3) étant monté sur ladite protubérance (18).

3. Machine d'étincelage à découpe par fil selon la revendication 2, dans laquelle ledit mécanisme de fixation comprend un trou taraudé orienté en direction radiale pratiqué dans la protubérance (18), une vis de réglage (40) étant vissée dans ledit trou taraudé.

4. Machine d'étincelage à découpe par fil selon la revendication 1, qui comprend:
un axe fileté (41) fixé au corps de machine (1) et muni de filets de vis sur sa face périphérique externe,
une protubérance (18) vissée audit axe fileté (41),
ledit rouleau (3) étant monté sur ladite protubérance (18), et
une paire d'écrous de blocage (42, 42) qui sont vissés audit axe fileté (41) et qui viennent en contact avec les deux extrémités de la protubérance (18) vissées audit axe fileté (41) pour empêcher ladite protubérance (18) de se déplacer en direction axiale par rapport audit axe fileté (41).

5. Machine d'étincelage à découpe par fil selon l'une quelconque des revendications précédentes, dans laquelle le rouleau est un rouleau de freinage.

6. Machine d'étincelage à découpe par fil selon la revendication 2, 3 ou 4, dans laquelle le rouleau est un rouleau de guidage de fil (3) monté sur ladite protubérance (18) via un palier (38).

7. Machine d'étincelage à découpe par fil selon l'une quelconque des revendications précédentes, dans laquelle ledit rouleau réglable fait partie de plusieurs rouleaux dont on peut régler les directions des axes de rotation par rapport à une position de défilement fixe du fil.
